# EUROPEAN PATENT SPECIFICATION

(11) **EP 2 072 109 B1**
(45) Date of publication and mention of the grant of the patent: **25.01.2012**
(21) Application number: 08253416.5
(22) Date of filing: 22.10.2008
(51) Int. Cl.: B01D 53/26, F25D 21/00

(54) **Squeezable moisture removal device**
Ausdrückbare Feuchtigkeitsentfernungsvorrichtung
Dispositif pressable d'élimination de l'humidité

(30) Priority: 19.12.2007 US 959508
(43) Date of publication of application: 24.06.2009
(73) Proprietor: Whirlpool Corporation, Benton Harbor, MI 49022 (US)
(72) Inventor: Wu, Guolian, St. Joseph, MI 49085 (US); Cur, Nihat O., St. Joseph, MI 49085 (US)
(74) Representative: Nicholls, Michael John

(56) References cited:
- EP-A- 1 839 728
- US-A- 3 065 595
- US-A- 3 712 029
- US-A- 5 427 609

## Description

The invention relates to moisture removal devices for removing unwanted moisture for use in appliances.

Typical moisture removal processes for appliances can include venting the moisture outside the appliance, venting moist air outside the building, using a desiccant material to absorb water vapor from air in the appliance and using a vapor compression cycle to condense moisture from the air in the appliance and disposing of the liquid water. Venting moisture outside the appliance may result in an undesirable increase in humidity outside the appliance and can lead to condensation on surfaces adjacent the appliance. Venting moist air from an appliance outside the building may be difficult or economically cost prohibitive. Vapor compression removal of moisture can be effective, but increases energy consumption of the appliance. Conventional desiccants either require energy intensive reheat processes for regeneration or must be replaced as they become saturated with water. A refrigerator having a moisture adsorbing desiccant is described in co-pending U.S. Patent Application No. 11/668,506, filed January 30, 2007 by Diego Barone et. al. US-A-3,712,029 discloses an exhaust pollution control system including dry- and wet-scrubber cleaning elements and a filter. EP-A1-1839728 discloses an air dryer cartridge including a dessicant. US-A-5,427,609 discloses a device for removing oil and moisture from gas on which the precharacterizing portion of claim 1 is based.

The invention relates to a moisture removal device and method as defined in the appended claims.

The apparatus for deforming the body of moisture removal material can be apparatus to change the shape of the body to mechanically remove liquid from the body. The apparatus to change the shape of the body can be apparatus for compressing, stretching or twisting the body to mechanically remove liquid from the body.

The apparatus for deforming the body of moisture removal material can be at least one roller arranged roll across the body to mechanically remove liquid from the body, or can be spaced rollers arranged to compress the body between the rollers to mechanically remove liquid from the body.

The heat sink can be arranged to cool the body to a temperature below which moisture will condense from air associated with the appliance. The porous media can be a resilient and flexible mesh pad and the heat sink can be an apparatus to cool the mesh pad. The mesh pad can be a metal mesh pad selected from the group of stainless steel, aluminum and copper. Alternately according to the invention, the mesh pad can be a synthetic mesh pad selected from the group of nylon, polypropylene and glass fiber. Also, the media can be a porous hydrophilic pad and the heat sink can be an apparatus to cool the hydrophilic pad.

The step of periodically deforming the body can include operating apparatus to change the shape of the body to mechanically remove liquid from the body. The step of operating apparatus to change the shape of the body can include compressing, stretching, twisting or passing rollers over the body to mechanically remove liquid from the body of moisture removal material.
The invention will be further described by way of example with reference to the accompanying drawings, in which:-

Fig. 1A is a schematic view of a moisture removal device according to the invention.

Fig. 1B is a schematic view of a moisture removal device according to the invention.

Fig. 1C is a schematic view of a moisture removal device according to the invention.

Fig. 2A is a schematic view of one embodiment of apparatus for deforming the body of moisture removal material.

Fig. 2B is a schematic view of another embodiment of apparatus for deforming the body of moisture removal material.

Fig. 2C is a schematic view of another embodiment of apparatus for deforming the body of moisture removal material.

Fig. 2D is a schematic view of another embodiment of apparatus for deforming the body of moisture removal material.

Fig. 2E is a schematic view of another embodiment of apparatus for deforming the body of moisture removal material.

Fig. 3 is a schematic view of a moisture removal device according to the invention combined with a refrigerator.

Fig. 4 is a schematic view of a moisture removal device according to the invention combined with a cooker hood.

Fig. 5 is a schematic view of a moisture removal device according to the invention combined with a room air conditioner.

Fig. 6 is a schematic view of a moisture removal device according to the invention combined with a dehumidifier.

Fig. 7 is a schematic view of a moisture removal device according to the invention combined with a dishwasher.

Fig. 8 is a schematic view of a moisture removal device according to the invention combined with a clothes dryer.

Fig. 9 is a schematic view of a moisture removal device according to the invention combined with a drying cabinet.

Moisture removal is a needed or desired process in many appliances. According to the invention a moisture removal device for reducing the moisture content of air associated with an appliance can include a body of moisture removal material, apparatus for moving air associated with an appliance into contact with the body and apparatus for deforming the body to regenerate the moisture capacity of the body of material. The body of moisture removal material can have a heat sink to remove heat of condensation from the body and, if desired, maintain the body below the anticipated dew point of the moist air to be treated. The body of moisture removing material can be regenerated by mechanically removing water from the body by squeezing, twisting or stretching the body of moisture removal material.

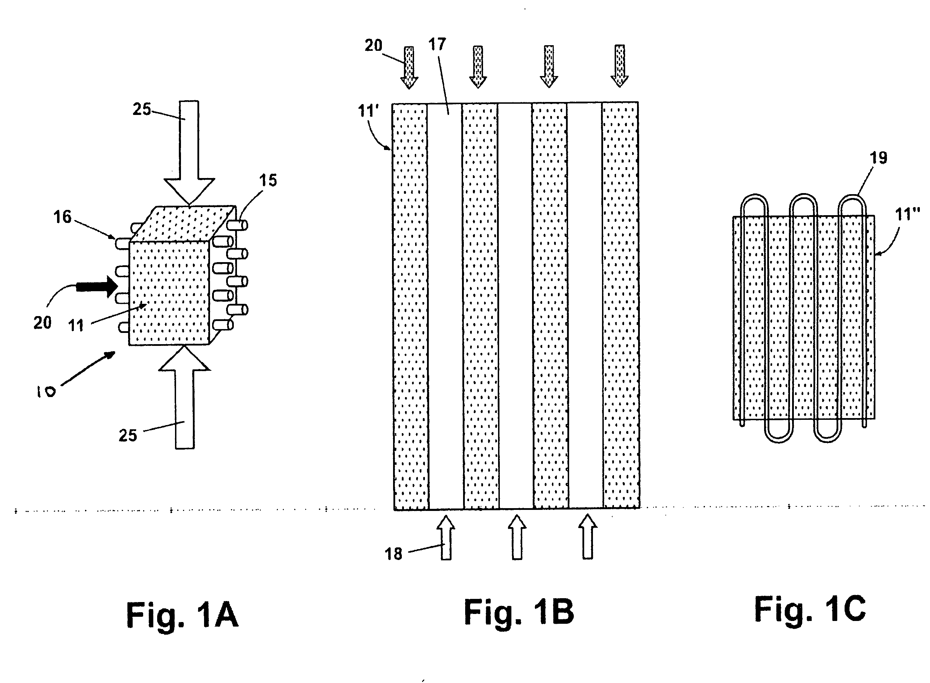

Referring to schematic illustrations Figs. 1A - 1C, a moisture removal device according to the invention can include a body 11, 11', 11" of moisture removal material. The body 11, 11', 11" can be a porous media that can adsorb or absorb and hold water vapor condensed on the media. Adsorb usually implies holding water of the surface of the media while absorb usually taking water into the media like a sponge. Materials that can be used to practice the invention can do both adsorbing as well as absorbing moisture. Adsorb and absorb will be used together and separately in this application interchangeably as both terms can describe aspects of the process of removing water vapor from air passing through moisture removal material according to the invention. Applicants do not intend to limit the meaning of either adsorb or absorb nor to limit how the moisture removal materials function in this application. In the process of converting water vapor in air to liquid water vapor gives up latent heat to the air stream. The latent heat from condensed water vapor can heat the media reducing the amount of vapor that can condense on the media. A heat sink can be provided to dissipate heat of condensation of moisture condensing on the body 11. Heat sink 15 is illustrated in Fig. 1A as a plurality of tubes positioned in body 11. Those skilled in the art will understand that any desired heat sink arrangement can be used to dissipate the heat of condensation in body 11 as water vapor condenses on body 11. For example in a refrigerator application a heat pipe, thermosiphon, refrigerant tubes linked to the primary refrigeration system or a secondary cooling loop can be used to cool the moisture removing material. For other appliances air cooling tubes or open channels 17 as illustrated in Fig. 1B can be provided in the moisture removing material for cool air flow 18, or can have serpentine cooling tubes 19 arranged to have cool water or other coolant flowing through the tubes to cool the moisture removal material as illustrated in Fig. 1C. Also, other heat removal devices such as thermoelectric devices can be used to cool the moisture removal material. For the moisture removal device to function effectively it is preferred to keep the temperature of moisture removal material lower than the temperature of the air to be treated by the moisture removal device, preferably below the dew point of the air. In the embodiment illustrated in Fig. 1A tubes 15 can be connected to a source of coolant 16, illustrated as an arrow entering one of the tubes 15, at a temperature low enough to cool the body 11 to a temperature below which moisture will condense from air associated with the appliance. Coolant 16 can be a liquid, ambient air, or in the case of refrigerating appliances can be refrigerant from the refrigerant circuit of the appliance. Moist air from the appliance can be directed through the body 11 as illustrated by arrow 20. Body 11 of moisture removal material can be mechanically deformed to remove liquid that has condensed on body 11 I to regenerate the moisture removal device. Arrows 25 schematically illustrate application of force to deform body 11 to regenerate the moisture capacity of body 11 in the embodiment of Fig. 1A. As will be described in detail below, body 11 can be deformed by compressing, stretching or twisting body 11 to remove liquid that has condensed on body 11. Force can similarly be applied to deform the bodies 11', 11" in the embodiments illustrated in Figs. 1 Band 1C.

Still referring to Figs. 1A - 1C, body 11, 11', 11" of moisture removal material will be described in greater detail. Body 11, 11', 11" can be formed of a hydrophilic media that will adsorb or absorb and hold liquid water condensed on the media, or can be hydrophobic material that will hold liquid condensed on the media. Body 11, 11', 11" can be regenerated by deforming body 11, 11', 11" to remove liquid condensed and accumulated on body 11, 11', 11 ". In order to improve condensation of water vapor on the media, the surface area of body 11, 11', 11" should be large and be arranged for contact by air associated with the appliance. Accordingly, a resilient and flexible mesh pad can be used as a body 11, 11', 11" of moisture removal material. Body 11, 11', 11" " can be non-woven or woven material or metal mesh pad that can be selected from the group of stainless steel, aluminum and copper. Alternately, body 11, 11', 11" can be a synthetic mesh pad selected from the group of nylon, polypropylene and glass fiber. Body 11, 11', 11" can be arranged with spaces sized on the molecular level to facilitate water vapor condensing on the media and to facilitate holding water molecules so long as the media is flexible so that it can be regenerated by deforming the body 11, 11', 11" to remove the water condensed from the air associated with the appliance. Alternately, body 1 l, 11', 11" can be a desiccant material that can absorb water vapor, hold liquid water and release the liquid water in response to deformation of a body of the desiccant material. As is well known in the art desiccants can absorb water vapor from the air by reducing partial pressure at the surface of the desiccant so that water vapor condenses on the desiccant material from the air. When water vapor condenses to a liquid latent heat, the heat of condensation, is given up to the air and accordingly to the mesh pad and desiccant. Accordingly, providing a body 11 comprising a desiccant with a heat sink 15 can facilitate condensation by lowering the temperature of the desiccant and mesh pad.

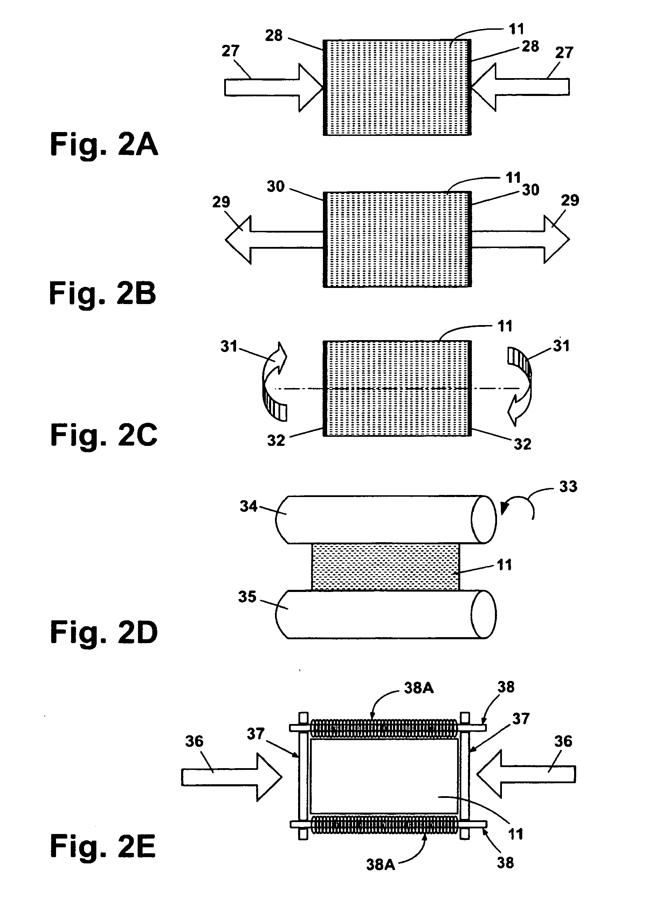

Turning to Figs. 2A - 2E, examples of apparatus for deforming a body of moisture removal material to regenerate the moisture removal device can be seen in schematic form. While a heat sink is not shown in Figs. 2A - 2E, any heat sink arrangement as described in this application can be provided for the body 11 in any of the Fig. 2A - Fig.2E embodiments. Likewise, any of the moisture removal material bodies illustrated in Figs. 1A - 1C can be used in combination with the apparatus for deforming moisture removal material subject to the ability of the moisture removal material to be deformed in the respective manner. While the apparatus for deforming a body of moisture removal material will be described with body 11 of moisture removal material, it should be understood that bodies 11' and 11" can be similarly provided with a suitable apparatus for deforming bodies 11' and 11 ". For example, twisting deformation as illustrated in Fig. 2C may not be suitable for use with a moisture removal device such as illustrated in Figs. 1A and 1C that can employ a heat exchange device that can be a plurality of tubes or serpentine tubes. As noted above, body 11 of moisture removal material can be regenerated by deforming body 11 to mechanically remove liquid condensed on body 11. As illustrated in Fig. 2A, body 11 can be deformed by applying compression force 27 to body 11. Compression force 27 can be manually applied by squeezing body 11 such as when a sponge is squeezed to wring out water held by the sponge. Alternately compression force 27 can be applied by positioning a plate 28 on one side of body 11 and applying compression force 27 to plate 28 to compress body 11 to remove accumulated liquid. Those skilled in the art will understand that another plate 28 can be provided on the opposite side of body 11 to facilitate applying compression force 27 to body 11. As illustrated in Fig. 2B, body 11 can be deformed by applying stretching force 29 to body 11. Stretching force 29 can be applied by applying stretching force to plate 30 attached to one end of body 11. As in the embodiment of Fig. 2A, another plate 30 can be attached to the opposite side of body 1 I to facilitate applying stretching force body 11. As illustrated in Fig. 2C, body 11 can be deformed by applying twisting force 31 to body 11. Twisting force 31 can be applied to a plate 32 attached to one end of body 11. As above, another plate 32 can be attached to the opposite side of body 11 to facilitate application of twisting force 31 to body 11. Those skilled in the art will understand that plates 28, 30 and 32 can take any form desired, and can be part of an apparatus supporting body 11 of moisture removal material, or, if other arrangements are desired to deform body 11, such as manually squeezing or twisting body 11 similar to wringing water out of a sponge, plates 28, 30 and 32 can be eliminated. As illustrated in Fig. 2D, body 11 can be deformed by applying compression force with rollers 34 and 35. Compression force 33 3 can be applied by driving one or both rollers 34 and 35 over body 11 to mechanically remove liquid contained in body 11. Those skilled in the art will understand that rollers can be rotatably held in a fixed location and body 1 I can be fed through rollers 34 and 35. Alternately, rollers 34 and 35 can be arranged to move across body 11 with the rotation of rollers 34 and 35 driving the rollers across body 11 to apply compression force to deform body 11. While two rollers, 34 and 35, are illustrated in Fig. 2D, those skilled in the art will understand that a single roller, not shown, can be provided to roll across body 11 applying compression force 33 to body 11 to deform body 11 and force liquid out of body 11. As illustrated in Fig. 2E, body 11 can be deformed by applying a compression force 36 to press plates 37 similar to the embodiment disclosed in Fig. 2A. Press plates 37 can be provided with sliding rods 38 and springs 38A that can be arranged to drive press plates 37 apart after body 11 has been compressed to force liquid out of body 11 and thus allow use of a moisture removal material that is not sufficiently resilient to drive press plates 37 apart without assistance. Applicant's invention is not limited to the alternate arrangements disclosed in Figs. 2A - 2E for regenerating a body 11 of moisture removal material. Any means for deforming a body 11 of moisture removal material to squeeze water out of body 11 through use of a manually applied force or a mechanism driven by an electric, thermal or wax motor, solenoid or linear motor can be employed to regenerate a moisture removal device. In addition, regeneration of a body 11 of moisture removal material by physical, chemical, electrical or magnetic triggers can be used to cause a body of moisture removal material to compress or self-collapse and force out the condensed water can be used. Further, plates such as plates 28 as described in Fig. 2A could be spring loaded toward one another, not shown, and arranged to be held apart with body 11 I in an uncompressed state. In response to a signal that body 11 needed regeneration the plate(s) could be released and body 11 regenerated by squeezing body 11. Following regeneration plates 28 could be manually or mechanically separated or reset allowing body 11 to return to its uncompressed state.

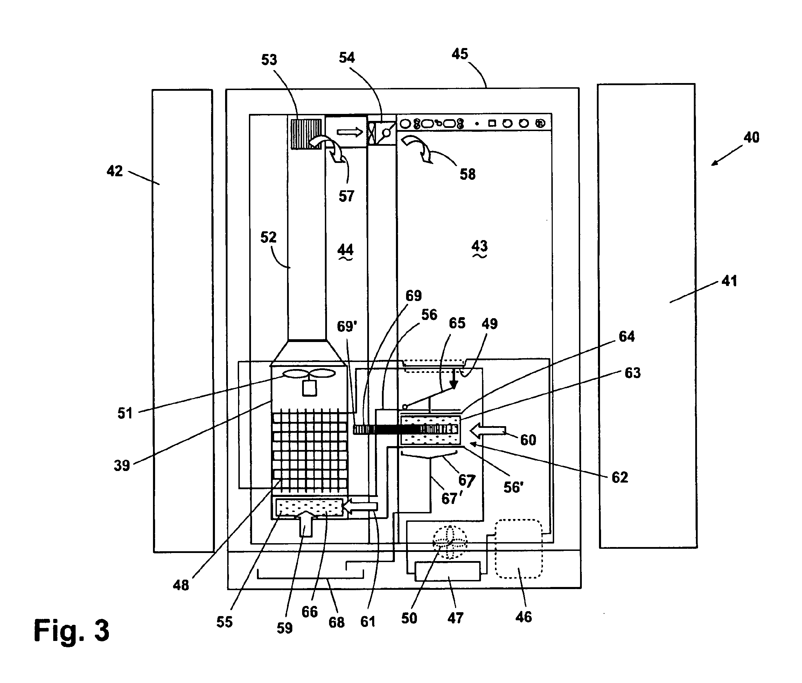

Turning to Fig. 3, application of a moisture removal device to a refrigerator will be described. Refrigerator 40 can be a domestic refrigerator and is illustrated in Fig. 3 is schematic form as a side by side refrigerator freezer. While refrigerator 40 is illustrated as a domestic side by side refrigerator in this embodiment, a moisture removal device according to the invention can be used in any configuration of refrigerator. Refrigerator 40 can have an insulated refrigerator compartment door 41 hinged to an insulated cabinet 45 to provide access to an above freezing refrigerator compartment 43 and an insulated freezer compartment door 42 hinged to cabinet 45 to provide access to below freezing freezer compartment 44. Refrigerator 40 can have a refrigeration system including a compressor 46, a condenser 47, and an evaporator 48 connected in a refrigeration circuit including a capillary tube expansion device 49 arranged with a suction line heat exchanger, all as well known in the art. Condenser 47 can have a condenser fan 50 arranged to circulate air over condenser 47 and evaporator 48 can have an evaporator fan 51 that can be arranged to circulate air over evaporator 48 and through the freezer compartment 44 and refrigerator compartment 43. Duct 52 can direct air chilled by evaporator 48 to the top of the freezer compartment for discharge of freezer compartment supply air 57 through outlet 53 and to a flow control device 54 controlling delivery of refrigerator compartment supply air 58 to refrigerator compartment 43. Flow control device 54 can be a thermostatically or manually controlled damper for controlling the temperature in the refrigerator compartment 43 as are well known in the art. An air return 55 can be provided to allow freezer compartment return air 59 from the freezer compartment 44 to flow into evaporator compartment 39 enclosing evaporator 48 that can be positioned along the rear wall of freezer compartment 44. A return duct 56 can be provided to allow refrigerator compartment return air 60 from the refrigerator compartment 43 to flow into the evaporator compartment 39. Refrigerator 40 can have suitable controls and control circuits (not shown) to control operation of the refrigerator all as are well known in the art.

Often fresh food stored in an above freezing refrigerator compartment can be moist with water such as can be the case with fruits and vegetables. In addition, some refrigerator users store containers that include water that are not sealed in a refrigerator compartment. Further, a refrigerator compartment door 41 may be opened more often than the freezer compartment door so that humid air from the space in which the refrigerator 40 is located will flow into the refrigerator compartment 43 when the refrigerator compartment door 41 is opened. Whatever the source, moisture in the air in a refrigerator freezer can form frost on the evaporator 48 that, over time, must be removed, typically by a defrost cycle. Typical defrost cycles include stopping the compressor and the air circulation fan(s) and heating the evaporator with a suitable heater to melt the frost and allow the water to flow out of the evaporator compartment into a condensate pan. Defrost cycles are necessary to allow efficient operation of the refrigeration system, but increase the energy consumption of the refrigerator and can cause temperatures in the refrigerator compartment and/or the freezer compartment to rise during the defrost cycle. By providing a moisture removal device 62 according to the invention the frequency of defrost cycles can be reduced or eliminated while allowing efficient operation of the refrigeration system.

A moisture removal device 62 according to the invention can be positioned in the refrigerator compartment 43 to remove moisture from the refrigerator compartment return air 60 prior to delivering the refrigerator compartment return air 60 to the evaporator compartment 39 from the refrigerator compartment 43. As illustrated in Fig. 3 moisture removal device 62 can be located adjacent to or in the inlet 56' to return duct 56 so that refrigerator compartment return air 60 can be dehumidified. Accordingly dehumidified refrigerator compartment return air 61 can be delivered to the evaporator 48. Moisture removal device 62 can include a body 63 of moisture removal material that can be similar to the moisture removal material described above. Moisture removal device 62 can also include a press plate 64 that can be arranged to compress body 63 to squeeze water out of the material. Body 63 of moisture removal material can have a heat pipe 69 having a cold end 69' that can be positioned in evaporator compartment 39 to provide a heat sink for the body of moisture removal material 63. Alternately, moisture removal device 62 can include a heat sink such as cooling tubes 15 in body of moisture removal material 63 as illustrated in Fig. 1A. Those skilled in the art will understand that other heat sink arrangements can be provided for body 63 to cool body 63 to temperatures below the refrigerator compartment air temperature and preferably below the dew point of air in the refrigerator compartment. Alternately, body 63 of moisture removal material can be a desiccant material that can be regenerated by physically deforming body 63 such as by squeezing as described above. A catch pan 67 and drain 67' can direct water squeezed from body of moisture removal material 63 to condensate pan 68 where it can evaporate into the air outside the refrigerator 40. In order to regenerate body 63 force can be applied to press plate 64 by a pivoted lever 65 that can be operated manually by the user, or can be mechanically operated by a motor (not shown), either periodically, or in response to a sensor determining that body 63 should be regenerated. While moisture removal device 62 in Fig. 3 is illustrated as a moisture removal device in which water is removed from the body of moisture removal material by squeezing the body 63, any of the moisture removal device configurations illustrated in Figs. 2A - 2E can be employed according to the invention as desired. Evaporator compartment 39 can be provided with a changeable desiccant cartridge 66 schematically positioned at or adjacent air return 55 to absorb moisture in freezer compartment return air 59. Changeable desiccant cartridge 66 can be removed and replaced when it becomes saturated. Changeable cartridge 66 can be provided with a suitable indicator to provide notice that the cartridge is due for replacement, or the refrigerator control, not shown, can include a sensor to detect when the cartridge is due for replacement or can accumulate time of use as is well known in the art. Further, changeable desiccant cartridge 66 can be arranged to contact a suitable heat exchanger as described above to remove heat of condensation from moisture being absorbed by the desiccant material. Alternately, those skilled in the art will understand that a conventional defrost arrangement as are well known in the art can be provided for evaporator 48 in the event that moisture entering freezer compartment 44 collects on evaporator 48 before the freezer compartment air is circulated through refrigerator compartment 43 and accordingly through moisture removal device 62. In the event a conventional defrost arrangement is provided for evaporator 48 the amount of heat added for defrosting can be reduced compared to a refrigerator freezer without a moisture removal device according to the invention due to the amount of moisture removed from air circulating in the refrigerator compartment 43 and freezer compartment 44 by moisture removal device 62.

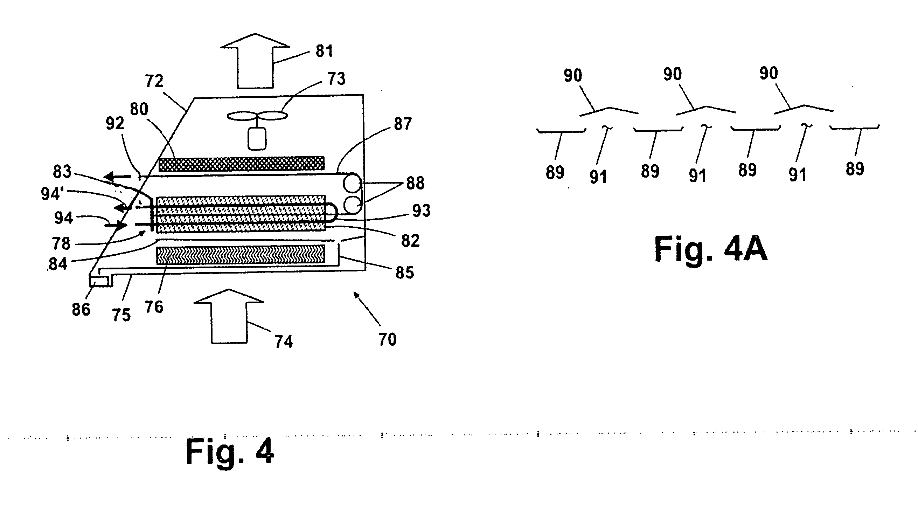

Turning to Fig. 4, application of a moisture removal device to a cooker hood will be described. Hood 70 can be a hood provided over a cooking appliance such as a cook top or free standing range, not shown, to remove cooking odors, smoke and moisture from the space in which the cooking appliance is installed. In the embodiment of Fig. 4, hood 70 is illustrated as a conventional hood for use over a cooking appliance. Those skilled in the art should understand that hood could also be part of a combination microwave oven hood (sometimes referred to as an over the range microwave hood) that can be installed over a cook top or free standing range as are well known in the art. Hood 70 can include a housing 72, a fan 73 an inlet 75, a grease filter 76, a moisture removal device 78, and if desired, a deodorizing filter 80. Hood 70 can include suitable controls and control circuit (not shown) to allow a user to selectively control operation of hood 70 all as are well known in the art. In operation a user can energize fan 73 drawing intake air 74 into the hood inlet 75, through grease filter 76, through moisture removal device 78, deodorizing filter 80, if included, and discharge air 81 back into the space in which the cooking appliance is installed or into a suitable exhaust duct system. Those skilled in the art will understand that use of a deodorizing filter 80 is optional, and that the location of the grease filter 76 and moisture removal device 78 can be interchanged if desired, however, a deodorizing filter 80 will perform better with dehumidified air passing through the deodorizing filter 80. Moisture removal device 78 can include a body 82 of moisture removal material that can be similar to the moisture removal material described above. The body 82 can be positioned in hood 70 so that inlet air 74 flowing through grease filter 76 can sequentially flow through body 82. Body 82 can have a press plate 83 that can be arranged to compress body 82 to squeeze water from the moisture removal material body 82. A water collecting plate 84 can be arranged below the body 82 to collect water squeezed out of body 82. Referring to Fig. 4A, water collecting plate 84, seen in cross section, can be a louvered plate that collects water squeezed from body 82 and drains the collected water to drain trough 85 that can be positioned along one or more sides of body 82 and that can lead to a water tank 86. Water collecting plate 84 can include collecting surfaces 89 that can have raised edges to retain water on the collecting surfaces 89. While not shown in Fig. 4A, collecting surfaces 89 can be connected through a suitable header arrangement, not shown, that leads to drain trough 85. Water collecting plate 84 can also include deflecting surfaces 90 that can be positioned over air passages 91 through water collecting plate 84. Thus, air can flow through passages 91 and around deflecting surfaces 90 and into body 82. Water tank 86 can be arranged to be emptied manually from time to time by the user, or can be connected to a plumbing drain in the building if desired. Press plate 83 can be operated by a cable 87 leading from press plate 83 over pulleys 88 to a handle 92 that can be accessible on the surface of housing 72. In order to regenerate the moisture removal device 78 a user can pull handle 92 drawing press plate 83 against body 82 to squeeze water out of the moisture removal material. As noted above, water squeezed out of the moisture removal device can drip down onto water collecting plate 84 and flow into water tank 86 through drain 85. Body 82 can be provided with a heat sink illustrated as a heat exchanger tube 93 that can be provided in body 93 that can be similar to the moisture removal device described in the embodiment of Fig. 1C. Heat exchanger tube 93 can be provided with a coolant that can be cold water from the building plumbing system or a source of chilled air from a source remote from the cooking appliance over which hood 70 is installed, not shown. Cold water can be supplied to inlet 94 and water flowing from heat exchanger tube 93 outlet 94' can be directed to a drain. Body 82 of moisture removal material can alternately be a desiccant material that can be regenerated by physically deforming body 82 as described above. Body 82 can be provided with air flow channels that can be similar to the moisture removal device described in the embodiment of Fig. 1B with a source of cool air separate from inlet air 74 to cool body 82 to remove the heat of condensation. Alternately, body 82 can be provided with any well known heat sink arrangement that can cool body 82 to temperatures lower than the temperature of the air passing through hood 70 and remove the heat of condensation.

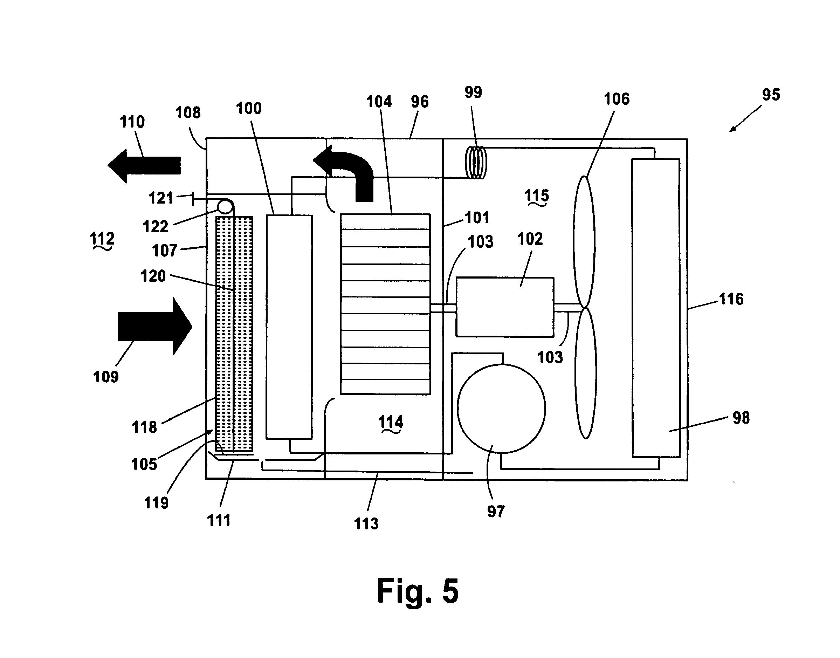

Turning to Fig. 5, application of a moisture removal device to an air conditioner will be described. Air conditioner 95, illustrated in schematic form in Fig. 5, can be a room air conditioner that can include a cabinet 96 and can include apparatus for mounting the cabinet 96 in a window or other opening in building, not shown. Air conditioner 95 can include a compressor 97, condenser 98, capillary tube expansion device 99 and an evaporator 100. Cabinet 96 can include a divider wall 101 that can separate an evaporator compartment 114 from a condenser compartment 115. A fan motor 102 can be mounted on the divider wall 101 and can include a shaft 103 projecting from each end of motor 102 to drive an evaporator fan 104 and a condenser fan 106. Air conditioner 95 can also include refrigerant lines connecting the compressor, condenser, capillary and evaporator as well as suitable controls and a control circuit (not shown) for controlling operation of the air conditioner all well known in the art. Air conditioner 95 can have a moisture removal device 105 that can be positioned in front of evaporator 100 inside of inlet 107 in the front wall of cabinet 96. Cabinet 96 can also have a discharge 108 for discharging conditioned air 110 into the conditioned space 112. In operation evaporator fan 104 can draw inlet air 109 into inlet 107, through moisture removal device 105 and evaporator 100, through evaporator fan 104 and discharge the conditioned discharge air 110 through discharge 108. Those skilled in the art will understand that the front wall of cabinet 96 can include a front panel that can include louvers to direct conditioned discharge air 110 in selected directions in the conditioned space 112 and can include a filter for dust and other particulate matter borne by inlet air 109, all as are well known in the art. Cabinet 96 can also include a drain pan 111 that can be positioned below evaporator 100 and moisture removal device 105. Drain pan 111 can have a drain line 113 that can convey condensate from the evaporator and water from moisture removal device 105 to the condenser compartment 115. As will be understood by those skilled in the art water directed to the condenser compartment 115 can be picked up by condenser fan 106 and directed into contact with condenser 98 to assist in removal of heat from the refrigeration system to improve efficiency of the system and dissipate the water. Cabinet 96 can have suitable louvers (not shown) for outside air to be drawn into the condenser compartment by the condenser fan 106 and discharged through condenser 98 and a discharge outlet 116 as is well known in the art.

Moisture removal device 105 can improve the dehumidification capacity of air conditioner 95 by removing moisture from inlet air 109 before inlet air 109 comes into contact with evaporator 100. It is important to reduce the relative humidity in the conditioned space for user comfort since, if the conditioned space temperature is reduced quickly without also reducing the relative humidity, the conditioned space can feel cold and clammy. Further, removal of latent heat and moisture from inlet air 109 can allow the air conditioner to remove heat more effectively from the inlet air 109 to reduce the sensible temperature of the inlet air 109. By providing a moisture removal device 105 the dehumidification capacity of air conditioner 95 can be increased. Moisture removal device can include a body 118 of moisture removal material as described above. Body 118 can be made of a desiccant material that can absorb water vapor from the moist inlet air 109. Heat of condensation released by water vapor condensing on body 118 can be given up by body 118 to evaporator 100 by air flowing through body 118. Alternately, body 118 can have a heat sink linking body 118 to evaporator 100 thermodynamically. Also, body 118 can be a body of non-desiccant moisture removal material that can be provided with a heat sink as described above. Body 118 can be regenerated by distorting body 118 by providing a press plate 119 at the bottom of body 118 that can be actuated by cable 120 that can pass over pulley 122 and connect to a pull handle 121 that can be accessible at the inlet 107 or on a front panel, not shown, if a front panel is used. In order to regenerate body 118 of moisture removal material a user can pull on pull handle 121 to lift press plate against body 118 compressing body 118 to squeeze water condensed on body 118 out of body 118. Water squeezed out of body 118 can run down into drain pan 111 and through drain line 113 to condenser compartment 115 for disposal as described above. If desired cable 120 can be connected to a suitable motor to be activated automatically instead of manually. Air conditioner 95 can be provided with a suitable control, not shown, that can sense when body 118 should be regenerated and provide a signal to a user or activate an automatic operation to regenerate moisture removal device 105 as desired. Alternately, air conditioner 95 could have an operating time controller that periodically provides a signal to regenerate the moisture removal device or automatically initiates a regeneration sequence.

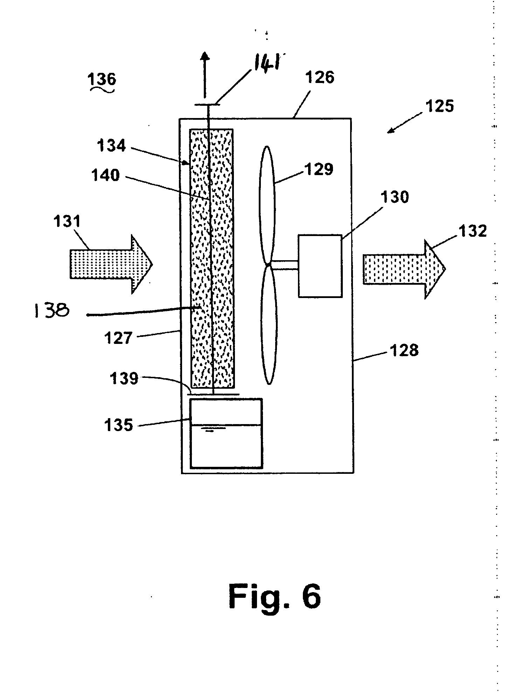

Turning to Fig. 6 application of a moisture removal device to a dehumidifier can be seen in schematic form. It can be desirable to have a dehumidifier that does not include a refrigeration system to provide a relatively quiet and compact dehumidifier for controlling humidity in small conditioned space or to provide supplemental dehumidification for a space in which humidity levels are controlled to some extent by a central climate control system. For example it could be desirable to use such a dehumidifier is a sleeping area or bathroom. Alternately, a dehumidifier according to the invention could be used in the same manner as a conventional vapor compression dehumidifier. Dehumidifier 125 can include a cabinet 126 that can have an inlet 127 and outlet 128 openings that can include a panel that can have a grill or louvers as are well known in the art. Cabinet 126 can house and support a fan 129 and motor 130 for drawing moist air 131 into cabinet 126 and discharging dry air 132. Cabinet 126 can also include moisture removal device 134 that can be positioned adjacent inlet opening 127. A water container 135 can be positioned in cabinet 126 below moisture removal device 134. Water container 135 can be removably supported in cabinet 126 for manual removal and emptying when full as is well known in the art, or if desired, can be provided with a drain line to allow water to drain from the water container 135 to a suitable drain in the conditioned space 136 such as a floor drain, not shown. Moisture removal device 134 can be similar to moisture removal devices described above, and can include a body 138 of desiccant moisture removal material as described above in connection with air conditioner 95 in Fig. 5. Heat of condensation released from the adsorbed water will heat the desiccant material forming body 138. Body 138 will give up at least a part of the heat of condensation to the air stream passing through body 138. Thus, as is the case with a conventional dehumidifier the heat of condensation from moisture removed from the conditioned space air will add heat to the conditioned space and can raise the conditioned space temperature unless arrangements are made to eject heat from the conditioned space. Also, body 138 can be a body of non-desiccant moisture removal material that can be provided with a heat sink as described above. A press plate 139 can be provided to compress body 138 to squeeze out water condensed on body 138. Water squeezed out of body 138 can fall into water container 135 for disposal as described above. Cable 140 can be connected to press plate 139 and a handle 141 that can be positioned on the exterior of cabinet 126. Moisture removal device 134 can be regenerated manually by pulling handle 141 squeezing water out of body 138 as press plate 139 compresses body 138. Instead of manually regenerating moisture removal device 134 by pulling handle 141, cable 140 could be connected to a motor to mechanically withdraw cable 140 to cause press plate 139 to compress body 138. Alternately, any of the arrangements described above can be used to regenerate moisture removal device 134. Dehumidifier 125 can also have suitable controls and a control circuit (not shown) to control operation of fan motor 130 when dehumidification is selected by a user, or when a humidistat (not shown) provides a signal that the humidity level is greater than a selected level, all as are well known in the art. Similarly, as is well known dehumidifier 125 can have a control that can include a sensor (not shown) to determine when water container 135 is filled and stop fan 130 until the water container is emptied and returned to its position in cabinet 126.

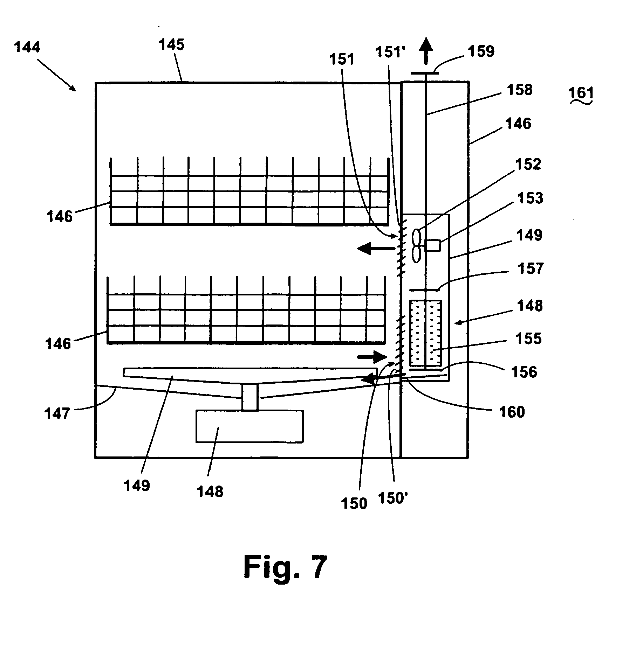

Turning to Fig. 7 application of a moisture removal device to a dishwasher can be seen in schematic form. Dishwashers typically include a drying cycle at the end of the dishwashing cycle to dry the dishes and utensils cleaned since even if the dishes and utensils are heated during the wash and rinse cycles some of the water remaining on the dishes and utensils remains since the volume of a dishwasher chamber is fairly small so that relative humidity remains quite high. One solution is to vent the dishwasher chamber at the end of the cycle to facilitate drying, and to provide heat in addition to venting the chamber. A disadvantage of venting the dishwasher chamber is that hot moist air is discharged into the space where the dishwasher is located that can condense on the dishwasher or on adjacent cabinets and furniture surfaces. In addition, use of heat during the dry cycle to increase the probability that dishes and utensils will be dry at the end of the cycle consumes additional energy. Application of a moisture removal device according to the invention can allow a dry cycle that does not vent hot moist air out of the dishwasher and does not use an electric heater during the dry cycle with attendant additional energy use. Dishwasher 144 can have a tank and base 145 that can movably support a plurality of racks 146 in tank 145. Tank 145 can have a bottom wall 147 that can be sloped to an inlet for a pump-motor assembly 148. Pump-motor 148 can supply water to one or more spray arms 149 for circulating water over dishes and utensils positioned in racks 146. While one spray arm 149 is illustrated two or three spray arms can be provided as is well known in the art. Dishwasher 144 can also have a door 146 pivotally mounted to tank and base 145 to close the open front of tank 145. In addition to ' controls and dispensers typically located in door 146, a moisture removal device 148 according to the invention can be provided in a chamber 149. Dishwasher 144 can have suitable controls and a control circuit (not shown) to control operation of dishwasher 144 all as are well known in the art. Chamber 149 can include an inlet 150 and an outlet 151 openings that can communicate with the inside of tank 145. Inlet 150 and outlet 151 1 openings can include louvers 150' and 151' that can keep water being circulated in tank 145 by spray arm(s) 149 from spraying into chamber 149 during the water circulation portions of a dishwasher cycle. If desired, inlet 150 and outlet 151 openings can be provided with a door or other closure arrangement, not shown, to exclude water vapor from tank 145 from chamber 149 during the water circulation portions of the dishwashing cycles. A fan 152 and motor 153 can be provided in chamber 149 to circulate hot moist air from tank 145 into chamber 149 through inlet 150, through moisture removal device 148 and back into tank 145 through outlet 151 during dry cycles. Moisture removal device 148 can be similar to moisture removal devices described above and can include a body 155 of moisture removal material, a movable plate 156, a fixed plate 157, a cable 158 connected on one end to movable plate 156 and on the other end to handle 159. Moisture removal device 148 can be regenerated by pulling on handle 159 causing movable plate 156 to compress body 155 against fixed plate 157 to squeeze water out of body 155. Alternately, a motor can be provided to actuate cable 158 to regenerate body 155 as described above. A drain 160 can lead from chamber 149 to tank 145 to drain water squeezed out of body 155. Body 155 can include a heat sink, not shown in Fig. 7, that can be similar to heat sink 15 described in Fig. 1 that can be cooled by a coolant flow 16 that can be air from the space 161 outside the dishwasher 144. Alternately, body 155 can be similar to body 11' in Fig. 1B having channels 17 for airflow from the space 161 outside the dishwasher. Air in the space 161 outside the dishwasher can be somewhat cooler that the hot moist air in tank 145 at the end of the dishwashing portion of the cycle and can be sufficient to cool body 155 to temperatures below the temperature of the air in tank 145, and preferably below the dew point of the air in tank 145. Those skilled in the art will understand that a suitable inlet and outlet openings in door 146 can be provided to support flow of cooling air from space 161 through a body 155 having channels similar to channels 17 in body 11 illustrated in Fig. 1B, or other heat sink arranged for cooling body 155 such as illustrated in Fig. 1A. Also, other heat sink arrangements can be provided for body 155 within the scope of the invention. For example, a body of moisture removal material similar to the embodiment illustrated in Fig. 1C could be provided and could be connected to a supply of tap water to cool the moisture removal material. Alternately, body 155 of moisture removal material can be a desiccant that can be regenerated by physically deforming body 155 such as by squeezing as described above.

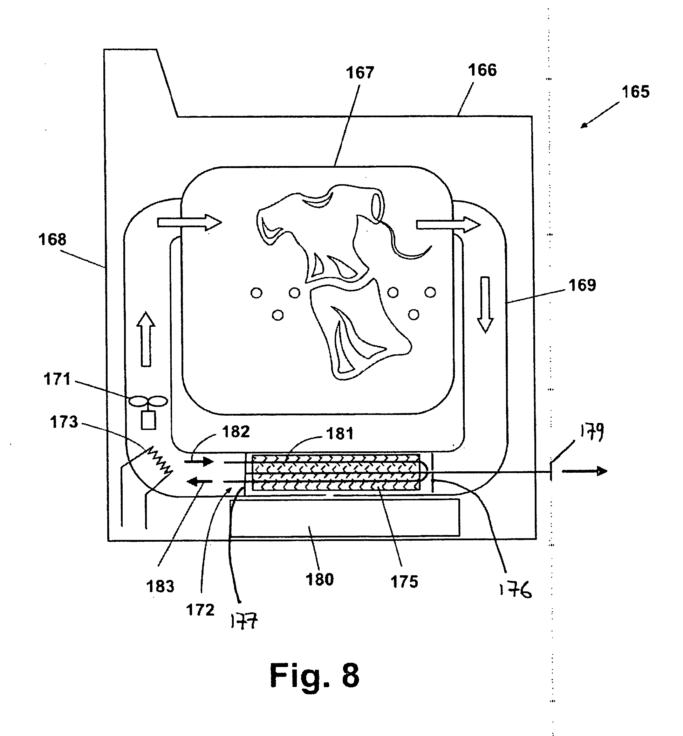

Turning to Fig. 8 application of a moisture removal device to a clothes dryer can be seen in schematic form. Clothes dryers are often installed with an outside exhaust duct to convey warm moist air to the outside of the building in which the dryer is installed. Clothes dryers also often are provided with gas burner or 220 v. electric heating elements for supply hot/warm air to the clothes dryer to relatively rapidly dry the clothes. However, some clothes dryers are installed in buildings where venting the dryer outdoors is not economically feasible or possible. Further, in some installations a gas hookup for a gas burner or a 220v. circuit is not possible in addition to not being able to vent the dryer outdoors. For such applications condenser dryers can be used to condense moisture from warm air circulated through the clothes drying drum without an outdoor vent. A moisture removal device according to the invention can be provided in a dryer as an alternate to conventional condenser dryers. Such a clothes dryer can be advantageous for an application where an outdoor vent arrangement is not economically feasible or desirable. Dryer 165 can have a cabinet 166 that can rotatably support a drum, 167 positioned in cabinet 166 and can be rotated by a motor, not shown, to tumble clothes placed in drum 167 to be dried. Dryer 165 can have an inlet duct 168 and outlet duct 169 that can be arranged to direct warm dry air circulated by a motor driven fan 171 into the drum 167 as drum 167 is rotated to cause clothes 170 to tumble in the warm dry air. Air circulating through inlet duct 168 can be heated by an electric heating element 173 as is well known in the art. Dryer 165 can have suitable controls and a control circuit to control operation of dryer 165 (not shown) all as are well known in the art. Air in outlet duct 169 can be directed through moisture removal device 172 to remove moisture from the air stream before the circulating air is reheated by electric heating element 173 and circulated back into drum 167 by fan 171. The heat of condensation of moisture removed by the moisture removal device can supplement heating of the air circulated back in to drum 167 by fan 171. An electric heating element 173 is illustrated in Fig. 8, but those skilled in the art will understand that any source of heat can be provided in lieu of an electric heating element as desired.

Moisture removal device 172 can include a body 175 of moisture removal material that can be similar to the moisture removal material described above. Moisture removal device 172 can have a fixed press plate 176 and a movable press plate 177 that can be connected to pull handle 179 by cable 178 so that a user can operated pull handle 179 to draw movable press plate 177 to compress body 175 and squeeze out water condensed in body 175. Dryer 165 can have a water container 180 positioned under moisture removal device 172 to capture and retain water squeezed out of body 175. Water container 180 can be removable to dispose of water collected from moisture removal device, or can be provided with a drain line (not shown) to convey water from water container 180 to a building drain, both as are well known in the art. Moisture removal device 172 can have heat exchanger tubes 181 provided in contact with body 175 arranged to remove heat of condensation from body 175 and maintain body 175 sufficiently cool to effectively allow water to condense from the warm moist air circulating in outlet duct 169 to dry the air before the air is reheated and circulated back into drum 167. Heat exchanger tubes 181 can have a coolant that can be cool air from outside the dryer 165 or cold water from a building supply of water supplied to inlet 182 of heat exchanger tubes 181 to cool body 175 of moisture removal material. Heated coolant from outlet 183 can be directed to a drain (water coolant) or into the building (air coolant). Body 175 could be similar to moisture removal bodies 11' or 11" illustrated in Figs. 1B and 1C. Alternately, body 175 of moisture removal material can be a desiccant that can be regenerated by physically deforming body 175 such as by squeezing as described above.

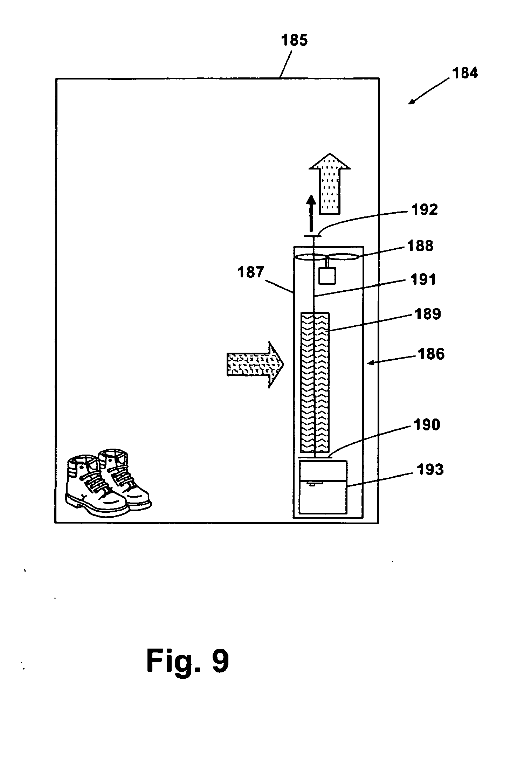

Turning to Fig. 9 application of a moisture removal device to a drying cabinet can be seen in schematic form. Drying cabinets can be useful for drying objects that should not or can not be placed in a conventional tumble clothes dryer. Objects such as shoes or boots can be noisy at best to dry in a tumble dryer, and depending on the boots could damage tumble dryers, and further, depending on temperature could be damaged by the temperatures in a conventional dryer. Other examples of objects that are better dried in cabinet without tumbling can include knitted wool items, coats, and large bulky items such as comforters and pillows. Drying cabinet 184 can include an enclosure 185 that can have a access opening or door (not shown) and can have suitable bars, racks and shelves (also not shown) as desired for supporting objects to be dried in the drying cabinet all as are well known in the art. Drying cabinet 184 can be provided with suitable controls and a control circuit (not shown) to control operation of drying cabinet 184 as are well known in the art. Drying cabinet 184 can also be provided with a heating element, not shown, if desired along with suitable controls to provide temperatures above ambient temperature in the drying cabinet if desired. Drying cabinet 184 can have a moisture removal device 186 that can include a duct 187, a circulating motor driven fan 188 and a body 189 of moisture removal material. Body 189 can be a desiccant moisture removal material that can be regenerated by physically deforming body 189 as described above. As described above in connection with a clothes dryer as illustrated in Fig. 8, the heat of condensation from body 189 can re-circulate in drying cabinet 184 to assist in drying objects placed in the drying cabinet. Body 189 can have a press plate 190 that can be connected to press plate 190 by cable 191 and can be arranged to compress body 189 when pull handle 192 is pulled by a user and squeeze out water condensed on body 189 as described above. Water squeezed out of body 189 can drain into water tank 193. Water tank 193 can be removed for disposal of the condensed water or can be provided with a drain line (not shown) to drain water from water tank 193 to a suitable building drain. Also, a motor can be provided to actuate cable 191 to automatically regenerate body 189 as described above. Body 189 can be similar to bodies 11' and 11" illustrated in Figs. 1B and 1C and can be arranged to be cooled by cool air flow or by tap water as described above. Alternately, body 189 of moisture removal material can be a desiccant that can be regenerated by physically deforming body 189 such as by squeezing as described above.

In each of the embodiments described in Figs. 3 - 9 one embodiment of an arrangement to deform the body of moisture removal material has been described to provide an example of how the invention can be practice. Any of the arrangements described in connection with Figs. 2A - 2E can be utilized in any of the embodiments described in Figs. 3 - 9, and further, other manual or mechanized arrangements for deforming a body of moisture removal material can be employed within the scope of the invention.
While the invention has been specifically described in connection with certain specific embodiments thereof, it is to be understood that this is by way of illustration and not of limitation, and the scope of the invention is defined by the appended claims.

### Parts List

| | | | |
|---|---|---|---|
| 10 | Moisture removal device | 56 | Return duct |
| 11 | Body of moisture removal material | 56' | Inlet to return duct |
| 12 | | 57 | Freezer compartment supply air |
| 13 | | 58 | Refrigerator comp. supply air |
| 14 | | 59 | Freezer compartment return air |
| 15 | Heat sink | 60 | Refrigerator comp. return air |
| 16 | Coolant flow | 61 | Dehumidified ref. comp. return air |
| 17 | Channels | 62 | Moisture removal device |
| 18 | Cool air flow | 63 | Body of moisture removal material |
| 19 | Cooling tubes | 64 | Press plate |
| 20 | Moist air flow | 65 | Lever |
| 21 | | 66 | Changeable desiccant cartridge |
| 22 | | 67 | |
| 23 | | 68 | Condensate pan |
| 24 | | 69 | |
| 25 | Deformation force | 70 | Hood |
| 26 | | 71 | |
| 27 | Compression force | 72 | Housing |
| 28 | Plate | 73 | Fan |
| 29 | Stretching force | 74 | Inlet air |
| 30 | Plate | 75 | Inlet |
| 31 | Twisting force | 76 | Grease filter |
| 32 | | 77 | |
| 33 | Compression force | 78 | Moisture removal device |
| 34 | Roller | 79 | |
| 35 | Roller | 80 | Deodorizing filter |
| 36 | Compression force | 81 | Discharge air |
| 37 | Plate | 82 | Body of moisture removal material |
| 38 | Sliding rod | 83 | |
| 38A | Spring | 84 | Water collecting plate |
| 39 | Evaporator compartment | 85 | Drain trough |
| 40 | Refrigerator | 86 | Water tank |
| 41 | Door | 87 | Cable |
| 42 | Door | 88 | Pulley |
| 43 | Refrigerator compartment | 89 | Collecting surface |
| 44 | Freezer compartment | 90 | Deflecting surface |
| 45 | Cabinet | 91 | Air passage |
| 46 | Compressor | 92 | Handle |
| 47 | Condenser | 93 | Heat exchanger tube |
| 48 | Evaporator | 94 | Cold water inlet |
| 49 | Capillary tube | 95 | Room air conditioner |
| 50 | Condenser fan | 96 | Cabinet |
| 51 | Evaporator fan | 97 | Compressor |
| 52 | Duct | 98 | Condenser |
| 53 | Outlet | 99 | Capillary |
| 54 | Flow control device | 100 | Evaporator |
| 55 | Air return | | |
| | | | |
| 101 | Divider wall | 146 | Door |
| 102 | Fan motor | 147 | |
| 103 | Motor shaft | 148 | Moisture removal device |
| 104 | Evaporator fan | 149 | Chamber |
| 105 | Moisture removal device | 150 | Inlet |
| 106 | Condenser fan | 150' | Louver |
| 107 | Inlet | 151 | Outlet |
| 108 | Discharge | 151' | Louver |
| 109 | Inlet air | 152 | Fan |
| 110 | Discharge air | 153 | Motor |
| 111 | Drain pan | 154 | |
| 112 | Conditioned space | 155 | Body of moisture removal material |
| 113 | Drain line | 156 | Movable plate |
| 114 | Evaporator compartment | 157 | Fixed plate |
| 115 | Condenser compartment | 158 | Cable |
| 116 | Discharge outlet | 159 | Handle |
| 117 | | 160 | Drain |
| 118 | Body of moisture removal material | 161 | Space outside the dishwasher |
| 119 | Press plate | 162 | Moisture removal device |
| 120 | Cable | 163 | |
| 121 | Handle | 164 | |
| 122 | Pulley | 165 | Dryer |
| 123 | | 166 | Cabinet |
| 124 | | 167 | Drum |
| 125 | Dehumidifier | 168 | Inlet duct |
| 126 | Cabinet | 169 | Outlet duct |
| 127 | Inlet opening | 170 | Clothes |
| 128 | Outlet opening | 171 | Fan |
| 129 | Fan | 172 | Moisture removal device |
| 130 | Motor | 173 | heater |
| 131 | Moist air | 174 | |
| 132 | Dry air | 175 | Body of moisture removal material |
| 133 | | 176 | Fixed press plate |
| 134 | Moisture removal device | 177 | Movable press plate |
| 135 | Water container | 178 | Cable |
| 136 | Conditioned space | 179 | Handle |
| 137 | | 180 | Water container |
| 138 | Body of moisture removal material | 181 | Heat exchanger tube |
| 139 | Press plate | 182 | Inlet |
| 140 | Cable | 183 | Outlet |
| 141 | Handle | 184 | Drying cabinet |
| 142 | | 185 | Enclosure |
| 143 | | 186 | Moisture removal device |
| 144 | Dishwasher | 187 | Duct |
| 145 | Tank | 188 | Fan |
| | | 189 | Body of moisture removal material |
| | | 190 | Press plate |
| | | | |
| 191 | Cable | | |
| 192 | Pull handle | | |
| 193 | Water tank | | |

## Claims

1. A moisture removal device (10, 62, 78, 105, 134, 148, 172, 186) for reducing the moisture content of air (20) associated with an appliance (40, 70, 95, 125, 144, 165, 184) comprising a body (11, 11', 11", 63, 82, 118, 138, 155, 175, 189) of moisture removing material that comprises one of: a porous media that adsorbs water vapor; and a porous media that absorbs and holds water vapor condensed on the porous media and apparatus (51, 73, 104, 129, 152, 171, 188) for moving air (20) associated with the appliance (40, 70, 95, 125, 144, 165, 184) into contact with the body (11, 11', 11", 63, 82, 118, 138, 155, 175, 189); **characterised in that** the moisture removal device (10, 62, 78, 105, 134, 148, 172, 186) further includes:
a heat sink (15, 69, 93, 181) for the body (11, 11', 11", 63, 82, 118, 138, 155, 175, 189) for dissipating the heat of condensation of moisture condensing on the body from air (20) associated with the appliance (40, 70, 95, 125, 144, 165, 184); and **in that**
the body (11, 11', 11", 63, 82, 118, 138, 155, 175, 189) is deformable; and by an apparatus (63, 64; 83, 87, 88, 92; 119, 120, 121, 122; 139, 140, 141; 156, 157, 158, 159; 176, 177, 178, 179; 190, 191, 192) for applying force (25) to deform the body (11, 11', 11", 63, 82, 118, 138, 155, 175, 189) to regenerate the moisture capacity of the body (11, 11', 11", 63, 82, 118, 138, 155, 175, 189).

2. The moisture removal device (10, 62, 78, 105, 134, 148, 172, 186) according to claim 1, wherein the apparatus (63, 64; 83, 87, 88, 92; 119, 120, 121, 122; 139, 140, 141; 156, 157, 158, 159; 176, 177, 178, 179; 190, 191, 192) for applying force (25) to deform the body (11, 11', 11", 63, 82, 118, 138, 155, 175, 189) comprises apparatus to change the shape of the body (11, 11', 11", 63, 82, 118, 138, 155, 175, 189) to mechanically remove liquid from the body (11, 11', 11", 63, 82, 118, 138, 155, 175, 189).

3. The moisture removal device (10) according to claim 1, wherein the apparatus for applying force (25) to deform the body (11, 11', 11") comprises apparatus (28; 34, 35; 37, 38, 38A) for applying force (27, 33, 36) to compress the body (11, 11', 11") to mechanically remove liquid from the body (11, 11', 11").

4. The moisture removal device (10) according to claim 1, wherein the apparatus for applying force (25) to deform the body (11, 11', 11") comprises apparatus (30) for applying force (29) to stretch the body (11, 11', 11") to mechanically remove liquid from the body (11, 11', 11").

5. The moisture removal device (10) according to claim 1, wherein the apparatus for applying force (25) to deform the body (11, 11', 11") comprises apparatus (32) for applying force (31) to twist the body (11, 11', 11") to mechanically remove liquid from the body (11, 11', 11").

6. The moisture removal device (10) according to claim 1, wherein the apparatus for applying force (25) to deform the body (11, 11', 11") comprises at least one roller (34, 35) arranged roll across the body (11, 11', 11") to mechanically remove liquid from the body (11, 11', 11").

7. The moisture removal device (10) according to claim 6, wherein the apparatus for applying force (25) to deform the body (11, 11', 11") comprises spaced rollers (34, 35) arranged to apply force (33) to compress the body (11, 11', 11") between the rollers (34, 35) to mechanically remove liquid from the body (11, 11', 11").

8. The moisture removal device (10, 62, 78, 105, 134, 148, 172, 186) according to any one of the preceding claims, wherein the body (11, 11', 11", 63, 82, 118, 138, 155, 175, 189) comprises a media to absorb and hold water vapor condensed on the media, and wherein the heat sink (15, 69, 93, 181) is arranged to cool the body (11, 11', 11", 63, 82, 118, 138, 155, 175, 189) to a temperature below which moisture will condense from air (20) associated with the appliance (40, 70, 95, 125, 144, 165, 184).

9. The moisture removal device (10, 62, 78, 105, 134, 148, 172, 186) according to claim 8, wherein the body (11, 11', 11", 63, 82, 118, 138, 155, 175, 189) comprises a resilient and flexible mesh pad (11, 11', 11") and the heat sink (15, 69, 93, 181) comprises an apparatus to cool the mesh pad (11, 11', 11").

10. The moisture removal device (10, 62, 78, 105, 134, 148, 172, 186) according to claim 9, wherein the mesh pad (11, 11', 11") comprises a metal mesh pad selected from the group of stainless steel, aluminum and copper.

11. The moisture removal device (10, 62, 78, 105, 134, 148, 172, 186) according to claim 9, wherein the mesh pad (11, 11', 11") comprises a synthetic mesh pad selected from the group of nylon, polypropylene and glass fiber.

12. The moisture removal device (10, 62, 78, 105, 134, 148, 172, 186) according to claim 8, wherein the body (11, 11', 11", 63, 82, 118, 138, 155, 175, 189) comprises a porous hydrophilic pad (11, 11', 11") and the heat sink (15, 69, 93, 181) comprises an apparatus to cool the hydrophilic pad (11, 11', 11").

13. A method for reducing the moisture content of air (20) associated with an appliance (40, 70, 95, 125, 144, 165, 184) having a body (11, 11', 11") of moisture removal material that comprises one of: a porous media that adsorbs water vapor; and a porous media that absorbs and holds water vapor condensed on the porous media; **characterised in that** the body (11, 11', 11") of moisture removal material is deformable and is provided with a heat sink (15); and **in that** the method comprises:
circulating moisture containing air (20) associated with the appliance (40, 70, 95, 125, 144, 165, 184) into contact with the body (11, 11', 11");
removing heat from the heat sink (15) to dissipate heat of condensation of moisture condensing on the body (11, 11', 11"); and
periodically applying force (25) to deform the body (11, 11', 11") to mechanically remove liquid from the body (11, 11', 11").

14. The method for reducing the moisture content of air (20) associated with an appliance (40, 70, 95, 125, 144, 165, 184) according to claim 13, wherein the step of periodically applying force (25) to deform the body (11, 11', 11") comprises operating apparatus (28; 30; 32; 34, 35; 37, 38, 38A) to change the shape of the body (11, 11', 11") to mechanically remove liquid from the body (11, 11', 11").

15. The method for reducing the moisture content of air (20) associated with an appliance according to claim 14, wherein the step of operating apparatus (28; 30; 32; 34, 35; 37, 38, 38A) to change the shape of the body (11, 11', 11") comprises at least one of:
a) applying force (27) to compress the body (11, 11', 11") to mechanically remove liquid from the body (11, 11', 11");
b) applying force (29) to stretch the body (11, 11', 11") to mechanically remove liquid from the body (11, 11', 11");
c) applying force (31) to twist the body (11, 11', 11") to mechanically remove liquid from the body (11, 11', 11");
d) passing rollers (34, 35) over the body (11, 11', 11") to compress the body (11, 11', 11") to mechanically remove liquid from the body (11, 11', 11").

## Patentansprüche

1. Feuchtigkeitsentfernungsvorrichtung (10, 62, 78, 105, 134, 148, 172, 186) zum Senken des Feuchteanteils von Luft (20) in einem Gerät (40, 70, 95, 125, 144, 165, 184), die einen Hauptteil (11, 11', 11", 63, 82, 118, 138, 155, 175, 189) aus Feuchteentfernungsmaterial, bei dem es sich um einen porösen Stoff, der Wasserdampf adsorbiert, oder einen porösen Stoff handelt, der auf dem porösen Stoff kondensierten Wasserdampf absorbiert und aufnimmt, sowie eine Vorrichtung (51, 73, 104, 129, 152, 171, 188) aufweist, mit der dem Gerät (40, 70, 95, 125, 144, 165, 184) zugehörige Luft (20) in die Berührung mit dem Hauptteil (11, 11', 11", 63, 82, 118, 138, 155, 175, 189) bringbar ist, **dadurch gekennzeichnet, dass** die Feuchtigkeitsentfernungsvorrichtung (10, 62, 78, 105, 134, 148, 172, 186) weiterhin aufweist:
eine Wärmesenke (15, 69, 93, 181) für den Hauptteil (11, 11', 11", 63, 82, 118, 138, 155, 175, 189), mit der Kondensationswärme von auf dem Hauptteil aus dem Gerät (40, 70, 95, 125, 144, 165, 184) zugeordneter Luft (20) abführbar ist, wobei der Hauptteil (11, 11', 11", 63, 82, 118, 138, 155, 175, 189) verformbar ist; und
eine Vorrichtung (63, 64, 83, 87, 88, 92, 119, 121, 122, 139, 140, 141, 156, 157, 158, 159, 176, 177, 178, 179, 190, 191, 192), mit der eine Kraft (25) zum Verformen des Hauptteils (11, 11', 11", 63, 82, 118, 138, 155, 175, 189) aufbringbar ist, um dessen Feuchtekapazität wiederherzustellen.

2. Feuchtigkeitsentfernungsvorrichtung (10, 62, 78, 105, 134, 148, 172, 186) nach Anspruch 1, bei der die Vorrichtung (63, 64, 83, 87, 88, 92, 119, 121, 122, 139, 140, 141, 156, 157, 158, 159, 176, 177, 178, 179, 190, 191, 192) zum Aufbringen einer Kraft (25) zum Verformen des Hauptteils (11, 11', 11", 63, 82, 118, 138, 155, 175, 189) eine Einrichtung aufweist, mit der dessen Gestalt so änderbar ist, dass sich aus ihm Flüssigkeit mechanisch entfernen lässt.

3. Feuchtigkeitsentfernungsvorrichtung (10) nach Anspruch 1, bei der die Einrichtung zum Aufbringen einer Kraft (25) zum Verformen des Hauptteils (11, 11', 11") eine Anordnung (28, 34, 35, 37, 38, 38A) zum Aufbringen einer Kraft (27, 33, 36) aufweist, mit der Hauptteil (11, 11', 112) sich komprimieren lässt, um aus ihm Flüssigkeit mechanisch zu entfernen.

4. Feuchtigkeitsentfernungsvorrichtung (10) nach Anspruch 1, bei der die Einrichtung zum Aufbringen einer Kraft (25) zum Verformen des Hauptteils (11, 11', 11") eine Anordnung (30) zum Aufbringen einer Kraft (29) aufweist, mit der der Hauptteil (11, 11', 11") sich strecken lässt, um aus ihm Flüssigkeit mechanisch zu entfernen.

5. Feuchtigkeitsentfernungsvorrichtung (10) nach Anspruch 1, bei der die Einrichtung zum Aufbringen einer Kraft (25) zum Verformen des Hauptteils (11, 11', 11") eine Anordnung (32) aufweist, mit der der Hauptteil (11, 11', 11") sich verdrillen lässt, um aus ihm Flüssigkeit mechanisch zu entfernen.

6. Feuchtigkeitsentfernungsvorrichtung (10) nach Anspruch 1, bei der die Einrichtung zum Aufbringen einer Kraft (25) zum Verformen des Hauptteils (11, 11', 11") mindestens eine Rolle (34, 35) aufweist, die über den Hauptteil (11, 11', 11 ") rollbar angeordnet ist, um aus ihm Flüssigkeit mechanisch zu entfernen.

7. Feuchtigkeitsentfernungsvorrichtung (10) nach Anspruch 6, bei der die Einrichtung zum Aufbringen einer Kraft (25) zum Verformen des Hauptteils (11, 11', 11") beabstandete Rollen (34, 35) aufweist, die angeordnet sind, eine Kraft (33) aufzubringen, mit der sich der Hauptteil (11, 11', 11") zwischen den Rollen (34, 35) zusammendrücken lässt, um aus ihm Flüssigkeit mechanisch zu entfernen.

8. Feuchtigkeitsentfernungsvorrichtung (10, 62, 78, 105, 134, 148, 172, 186) nach einem der vorgehenden Ansprüche, bei der der Hauptteil (11, 11', 11", 63, 82, 118, 138, 155, 175, 189) einen Stoff aufweist, der auf sich kondensierten Wasserdampf absorbieren und aufnehmen kann, wobei die Wärmesenke (15, 69, 93, 181) angeordnet ist, den Hauptteil (11, 11', 11", 63, 82, 118, 138, 155, 175, 189) auf eine Temperatur zu kühlen, unterhalb der Feuchte aus dem Gerät (40, 70, 95, 125, 144, 165, 184) zugehöriger Luft (20) kondensiert.

9. Feuchtigkeitsentfernungsvorrichtung (10, 62, 78, 105, 134, 148, 172, 186) nach Anspruch 8, bei der der Hauptteil (11, 11', 11 ", 63, 82, 118, 138, 155, 175, 189) ein elastisches und flexibles Maschenkissen (11, 11', 112) und die Wärmesenke (15, 69, 93, 181) eine Vorrichtung zum Kühlen des Maschenkissens (11, 11', 11") aufweisen.

10. Feuchtigkeitsentfernungsvorrichtung (10, 62, 78, 105, 134, 148, 172, 186) nach Anspruch 9, bei der der Hauptteil (11, 11', 11") ein Metall-Maschenkissen aus der Gruppe nichtrostender Stahl, Aluminium und Kupfer aufweist.

11. Feuchtigkeitsentfernungsvorrichtung (10, 62, 78, 105, 134, 148, 172, 186) nach Anspruch 9, bei der das Maschenkissen (11, 11', 11") ein Kunststoff-Maschenkissen aus der Gruppe Nylon, Polypropylen und Glasfasern aufweist.

12. Feuchtigkeitsentfernungsvorrichtung (10, 62, 78, 105, 134, 148, 172, 186) nach Anspruch 8, bei der der Hauptteil (11, 11', 11 ", 63, 82, 118, 138, 155, 175, 189) ein poröses hydrophiles Kissen (11, 11', 11") und die Wärmesenke (15, 69, 93, 181) eine Anordnung zum Kühlen des hydrophilen Kissens (11, 11',11") aufweisen.

13. Verfahren zum Senken des Feuchteanteils von Luft (20), die einem Gerät (40, 70, 95, 125, 144, 165, 184) mit einem Hauptteil (11, 11', 11") aus einem Entfeuchtungsmaterial zugeordnet ist, das einen Wasserdampf adsorbierendern porösen Stoff oder einen porösen Stoff aufweist, der auf dem porösen Stoff kondensierten Wasserdampf absorbieren und aufnehmen kann, **dadurch gekennzeichnet, dass** der aus Entfeuchtungsmaterial bestehende Hauptteil (11, 11',11") verformbar und mit einer Wärmesenke (15) versehen ist, und das aufweist:
Führen von dem Gerät (40, 70, 95, 125, 144, 165, 184) zugeordneter feuchtehaltiger Luft (20) in den Kontakt mit dem Hauptteil (11, 11', 11");
Abführen von Wärme von der Wärmesenke (15), um Kondensationswärme aus auf dem Hauptteil (11,11', 11") kondensierender Feuchtigkeit zu entfernen; und
periodisches Beaufschlagen einer Kraft (25), um den Hauptteil (11,11', 11") zu verformen und so aus dem Hauptteil (11, 11', 11") Flüssigkeit mechanisch zu entfernen.

14. Verfahren zum Senken des Feuchteanteils von einem Gerät (40, 70, 95, 125, 144, 165, 184) mit einem Hauptteil (11, 11', 11") zugeordneter Luft (20) nach Anspruch 13, bei dem der Schritt des periodischen Aufbringens einer Kraft (25) zum Verformen des Hauptteils (11, 11', 11") beinhaltet, die Vorrichtung (28, 30, 32, 34, 35, 37, 38, 38A) so zu betreiben, dass die Gestalt des Hauptteils (11, 11', 11") geändert und damit Flüssigkeit aus dem Hauptteil (11, 11', 11") mechanisch entfernt wird.

15. Verfahren zum Senken des Feuchteanteils von einem Gerät (40, 70, 95, 125, 144, 165, 184) mit einem Hauptteil (11, 11', 11") zugeordneter Luft (20) nach Anspruch 14, bei dem der Schritt des Betreibens der Vorrichtung (28, 30, 32, 34, 35, 37, 38, 38A) zum Ändern der Gestalt des Hauptteils (11, 11', 11") mindestens einen der folgenden Schritte beinhaltet:
a) Aufbringen einer Kraft (25) zum Komprimieren des Hauptteils (11, 11', 11") derart, dass aus dem Hauptteil (11, 11', 11") Flüssigkeit mechanisch entfernt wird;
b) Aufbringen einer Kraft (29) zum Recken des Hauptteils (11, 11', 11") derart, dass aus dem Hauptteil (11, 11', 11") Flüssigkeit mechanisch entfernt wird;
c) Aufbringen einer Kraft (29) zum Verdrillen des Hauptteils (11, 11', 11") derart, dass aus dem Hauptteil (11, 11', 11") Flüssigkeit mechanisch entfernt wird;
d) Überrollen des Hauptteil (11, 11', 11") mit Rollen (34, 35) derart, dass aus dem Hauptteil (11, 11', 11") Flüssigkeit mechanisch entfernt wird.

## Revendications

1. Dispositif de suppression d'humidité (10, 62, 78, 105, 134, 148, 172, 186) pour réduire la teneur en humidité de l'air (20) associé à un équipement (40, 70, 95, 125, 144, 165, 184) comprenant un corps (11, 11', 11'', 63, 82, 118, 138, 155, 175, 189) réalisé avec un matériau de suppression d'humidité qui comprend l'un parmi : un milieu poreux qui adsorbe la vapeur d'eau ; et un milieu poreux qui absorbe et maintient la vapeur d'eau condensée sur le milieu poreux et l'appareil (51, 73, 104, 129, 152, 171, 188) pour déplacer l'air (20) associé à l'équipement (40, 70, 95, 125, 144, 165, 184) en contact avec le corps (11, 11', 11" 63, 82, 118, 138, 155, 175, 189) ; **caractérisé en ce que** le dispositif de suppression d'humidité (10, 62, 78, 105, 134, 148, 172, 186) comprend en outré :
un dissipateur de chaleur (15, 69, 93, 181) pour le corps (11, 11', 11'', 63, 82, 118, 138, 155, 175, 189) pour dissiper la chaleur de condensation de l'humidité sur le corps provenant de l'air (20) associé à l'équipement (40, 70, 95, 125, 144, 165, 184) ; et **en ce que** :
le corps (11, 11', 11" , 63, 82, 118, 138, 155, 175, 189) est déformable ; et par
un appareil (63, 64 ; 83, 87, 88, 92 ; 119, 120, 121, 122 ; 139, 140, 141 ; 156, 157, 158, 159 ; 176, 177, 178, 179 ; 190, 191, 192) pour appliquer une force (25) afin de déformer le corps (11, 11', 11'', 63, 82, 118, 138, 155, 175, 189) pour régénérer la capacité d'humidité du corps (11, 11', 11'', 63, 82, 118, 138, 155, 175, 189).

2. Dispositif de suppression d'humidité (10, 62, 78, 105, 134, 148, 172, 186) selon la revendication 1, dans lequel l'appareil (63, 64 ; 83, 87, 88, 92 ; 119, 120, 121, 122 ; 139, 140, 141 ; 156, 157, 158, 159 ; 176, 177, 178, 179 ; 190, 191, 192) pour appliquer une force (25) afin de déformer le corps (11, 11', 11'', 63, 82, 118, 138, 155, 175, 189) comprend l'appareil pour changer la forme du corps (11, 11', 11'', 63, 82, 118, 138, 155, 175, 189) afin de retirer mécaniquement le liquide du corps (11, 11', 11" , 63, 82, 118, 138, 155, 175, 189).

3. Dispositif de suppression d'humidité (10) selon la revendication 1, dans lequel l'appareil pour appliquer une force (25) afin de déformer le corps (11, 11', 11'') comprend l'appareil (28 ; 34, 35 ; 37, 38, 38A) pour appliquer la force (27, 33, 36) afin de comprimer le corps (11, 11', 11") pour retirer mécaniquement le liquide du corps (11, 11', 11").

4. Dispositif de suppression d'humidité (10) selon la revendication 1, dans lequel l'appareil pour appliquer une force (25) afin de déformer le corps (11, 11', 11'') comprend l'appareil (30) pour appliquer une force (29) afin d'étirer le corps (11, 11', 11'') pour retirer mécaniquement le liquide du corps (11, 11', 11'').

5. Dispositif de suppression d'humidité (10) selon la revendication 1, dans lequel l'appareil pour appliquer la force (25) afin de déformer le corps (11, 11', 11'') comprend l'appareil (32) pour appliquer la force (31) afin de tordre le corps (11, 11', 11'') pour retirer mécaniquement le liquide du corps (11, li', 11'').

6. Dispositif de suppression d'humidité (10) selon la revendication 1, dans lequel l'appareil pour appliquer la force (25) afin de déformer le corps (11, 11', 11'') comprend au moins un rouleau (34, 35), le rouleau étant agencé sur le corps (11, 11', 11'') pour retirer mécaniquement le liquide du corps (11, 11', 11'').

7. Dispositif de suppression d'humidité (10) selon la revendication 6, dans lequel l'appareil pour appliquer la force (25) afin de déformer le corps (11, 11', 11'') comprend des rouleaux espacés (34, 35) agencés pour appliquer la force (33) afin de comprimer le corps (11, 11', 11'') entre les rouleaux (34, 35) pour retirer mécaniquement le liquide du corps (11, 11', 11'').

8. Dispositif de suppression d'humidité (10, 62, 78, 105, 134, 148, 172, 186) selon l'une quelconque des revendications précédentes, dans lequel le corps (11, 11', 11", 63, 82, 118, 138, 155, 175, 189) comprend un milieu pour adsorber et contenir la vapeur d'eau condensée sur le milieu, et dans lequel le dissipateur de chaleur (15, 69, 93, 181) est agencé pour refroidir le corps (11, 11', 11" , 63, 82, 118, 138, 155, 175, 189) à une température inférieure à la température à laquelle l'humidité se condense à partir de l'air (20) associé avec l'équipement (40, 70, 95, 125, 144, 165, 184).

9. Dispositif de suppression d'humidité (10, 62, 78, 105, 134, 148, 172, 186) selon la revendication 8, dans lequel le corps (11, 11', 11'', 63, 82, 118, 138, 155, 175, 189) comprend un coussinet en maille élastique et souple (11, 11', 11'') et le dissipateur de chaleur (15, 69, 93, 181) comprend un appareil pour refroidir le coussinet en maille (11, 11', 11'').

10. Dispositif de suppression d'humidité (10, 62, 78, 105, 134, 148, 172, 186) selon la revendication 9, dans lequel le coussinet en maille (11, 11', 11'') comprend un coussinet en maille métallique choisi dans le groupe comprenant l'acier inoxydable, l'aluminium et le cuivre.

11. Dispositif de suppression d'humidité (10, 62, 78, 105, 134, 148, 172, 186) selon la revendication 9, dans lequel le coussinet en maille (11, 11', 11'') comprend un coussinet en maille synthétique choisi dans le groupe comprenant le nylon, le polypropylène et la fibre de verre.

12. Dispositif de suppression d'humidité (10, 62, 78, 105, 134, 148, 172, 186) selon la revendication 8, dans lequel le corps (11, 11', 11" , 63, 82, 118, 138, 155, 175, 189) comprend un coussinet hydrophile poreux (11, 11', 11") et le dissipateur de chaleur (15, 69, 93, 181) comprend un appareil pour refroidir le coussinet hydrophile (11, 11', 11'').

13. Procédé pour réduire la teneur en humidité de l'air (20) associé à un équipement (40, 70, 95, 125, 144, 165, 184) ayant un corps (11, 11', 11'') réalisé avec un matériau de suppression d'humidité qui comprend l'un parmi : un milieu poreux qui adsorbe la vapeur d'eau ; et un milieu poreux qui absorbe et contient la vapeur d'eau condensée sur le milieu poreux ; **caractérisé en ce que** le corps (11, 11', 11") réalisé avec un matériau de suppression d'humidité est déformable et est prévu avec un dissipateur de chaleur (15) ; et **en ce que** le procédé comprend les étapes consistant à :
faire circuler l'air (20) contenant l'humidité associé à l'équipement (40, 70, 95, 125, 144, 165, 184) en contact avec le corps (11, 11', 11'') ;
retirer la chaleur du dissipateur de chaleur (15) pour dissiper la chaleur de condensation d'humidité se condensant sur le corps (11, 11', 11'') ; et
appliquer périodiquement la force (25) pour déformer le corps (11, 11', 11'') afin de retirer mécaniquement le liquide du corps (11, 11', 11'').

14. Procédé pour réduire la teneur en humidité de l'air (20) associé à un équipement (40, 70, 95, 125, 144, 165, 184) selon la revendication 13, dans lequel l'étape consistant à appliquer périodiquement la force (25) afin de déformer le corps (11, 11', 11'') comprend l'étape consistant à actionner l'appareil (28 ; 30 ; 32 ; 34, 35 ; 37, 38, 38A) pour modifier la forme du corps (11, 11', 11'') afin de retirer mécaniquement le liquide du corps (11, 11', 11").

15. Procédé pour réduire la teneur en humidité de l'air (20) associé à un équipement selon la revendication 14, dans lequel l'étape consistant à actionner l'appareil (28 ; 30 ; 32 ; 34, 35 ; 37, 38, 38A) pour modifier la forme du corps (11, 11', 11'') comprend au moins une étape parmi les étapes suivantes :
a) appliquer la force (27) pour comprimer le corps (11, 11', 11'') afin de retirer mécaniquement le liquide du corps (11, 11', 11'') ;
b) appliquer la force (29) pour étirer le corps (11, 11', 11'') afin de retirer mécaniquement le liquide du corps (11, 11', 11'') ;
c) appliquer la force (31) pour tordre le corps (11, 11', 11") pour retirer mécaniquement le liquide du corps (11, 11', 11'') ;
d) faire passer des rouleaux (34, 35) sur le corps (11, 11', 11'') pour comprimer le corps (11, 11', 11'') afin de retirer mécaniquement le liquide du corps (11, 11', 11'').
